# FASCICULE DE BREVET EUROPEEN

(11) **EP 1 211 879 B1**
(45) Date de publication et mention de la délivrance du brevet: **27.12.2006**
(21) Numéro de dépôt: 01402526.6
(22) Date de dépôt: 01.10.2001
(51) Int. Cl.: H04M 11/06, H04M 19/02

(54) **Dispositif de raccordement d'une ligne d'abonné à une liaison haute fréquence et à une liaison basse fréquence**
Einrichtung zum Anschluss einer Teilnehmerleitung an eine Verbindung mit hoher Frequenz und eine Verbindung mit niedriger Frequenz
Apparatus for connecting a subscriber line to a high frequency link and a low frequency link

(30) Priorité: 30.11.2000 FR 0015486
(43) Date de publication de la demande: 05.06.2002
(73) Titulaire: ALCATEL, 75008 Paris (FR)
(72) Inventeur: Grimaud, Jean-Yves, 22560 Pleumeur Bodou (FR)
(74) Mandataire: Sciaux, Edmond

(56) Documents cités:
- US-A- 6 144 735

## Description

La présente invention concerne un dispositif de raccordement d'une ligne d'abonné à une liaison haute fréquence et à une liaison basse fréquence. Elle s'applique dans les réseaux de communication, en particulier sur le réseau commuté de téléphonie publique.

Un tel réseau raccorde par une ligne un abonné à un centre de commutation. L'abonné dispose en effet d'un poste téléphonique qui produit un signal basse fréquence et il dispose aussi d'un terminal informptique qui produit un signal haute fréquence, ces deux signaux étant acheminés en concomitance sur la ligne d'abonné.

Dans le centre de commutation, un dispositif est prévu pour le raccordement de la ligne d'abonné à une liaison basse fréquence et à une liaison haute fréquence respectivement chargées d'acheminer le signal basse fréquence et le signal haute fréquence. Typiquement, la liaison haute fréquence est une liaison numérique à débit asymétrique peut-être plus connue sous l'acronyme "ADSL" de l'expression anglo-saxonne "Asymetrical Digital Subscriber Line".

La séparation des deux signaux ne pose pas de difficultés particulières si ce n'est que le signal basse fréquence peut présenter des parasites dont le spectre recouvre partiellement celui du signal haute fréquence. A titre d'exemple, le signal de sonnerie du poste téléphonique qui transite sur la liaison basse fréquence est bien un signal basse fréquence mois il s'agit d'un signal pulsé présentant des harmoniques qui sont des parasites haute fréquence. Il convient donc de prévoir une fonction de filtrage passe-bas dans le dispositif de raccordement pour éviter d'introduire des composantes haute fréquence de la liaison basse fréquence sur la liaison haute fréquence.

Cette fonction de filtrage est habituellement réalisée au moyen d'un module spécifique qui nécessite de nombreux composants.

Le document **US *6.144.735*** décrit un dispositif de raccordement d'une ligne d'abonné à une liaison haute fréquence et à une liaison basse fréquence, comportant une cascade de filtres passifs comportant des résistances et des capacités qui sont commutés par un relais commandé par un signal de détection de décrochage/raccrochage du combiné téléphonique, afin d'obtenir des caractéristiques de filtrage différentes respectivement pour le cas où un abonné n'a pas décroché et pour le cas où un abonné a décroché.

La présente invention a ainsi pour objet un dispositif de raccordement qui simplifie considérablement l'implémentation de cette fonction de filtrage.

Selon l'invention, le dispositif de raccordement d'une ligne d'abonné à une liaison haute fréquence et à une liaison basse fréquence comprend un transformateur disposé entre cette ligne d'abonné et une liaison de signalisation, ce transformateur comportant une bobine de couplage prévue pour être alimentée par un codeur, dispositif comprenant également un premier commutateur pour injecter sur la liaison de signalisation respectivement un signal de sonnerie ou un signal d'alimentation en réponse respectivement à un premier ou à une deuxième état d'un signal de commande ; de plus, le dispositif comprend un deuxième commutateur pour respectivement connecter ou déconnecter l'alimentation de la bobine de couplage en réponse respectivement au deuxième ou au premier état du signal de commande.

Ainsi le transformateur assure une fonction de couplage lorsque le signal de commande est dans son deuxième état et il assure la fonction de filtrage passe-bas lorsque ce signal de commande est dans son premier état.

Avantageusement, le dispositif comporte un filtre passe-bas disposé entre le transformateur et la ligne d'abonné.

Ainsi, le filtre passe-bas comprend un élément capacitif.

De préférence, ce filtre passe-bas comprend une bobine d'arrêt en mode commun agencée entre l'élément capacitif et le transformateur.

De même, il comprend une bobine d'arrêt en mode différentiel agencée entre la ligne d'abonné et l'élément capacitif.

Par ailleurs, selon un mode de réalisation privilégié, le dispositif comporte un condensateur de filtrage disposé entre le transformateur et la liaison de signalisation.

Préférentiellement, le dispositif comprenant une boucle de régulation dont une extrémité est connectée à la bobine de couplage, l'autre extrémité de cette boucle de régulation est connectée à la sortie du transformateur, côté ligne d'abonné.

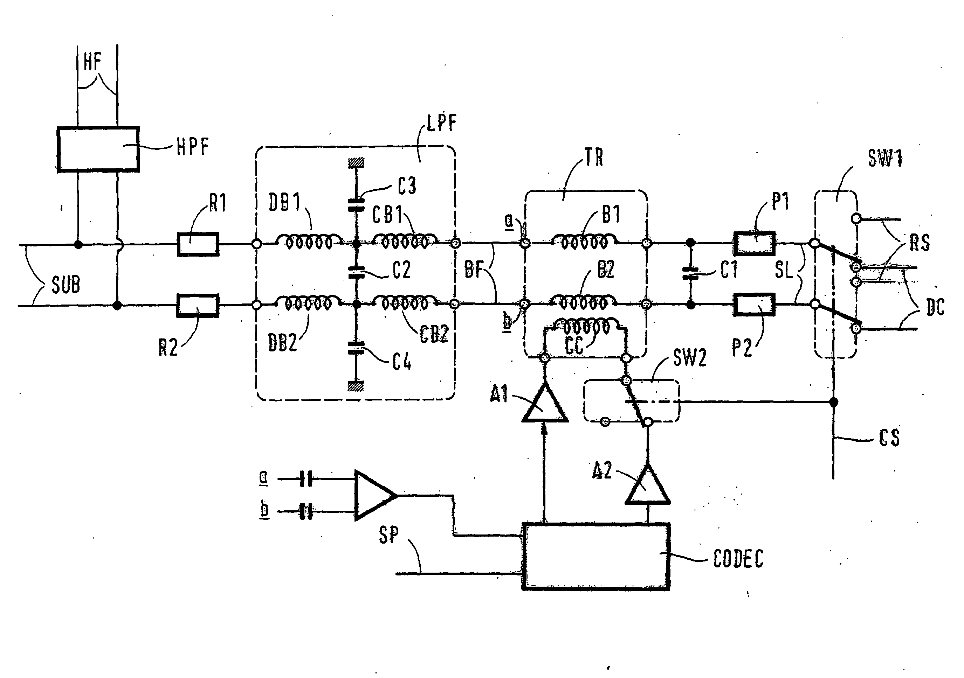

L'invention apparaîtra maintenant de manière plus précise dans le cadre de la description qui suit d'exemples de mise en oeuvre donnés à titre illustratif en se référant à la figure unique annexée qui représente un schéma du dispositif.

La présente invention est donc présentée dans une application au réseau commuté de téléphonie publique.

En référence à la figure, le transformateur TR comprend une première bobine B1 dont une borne est repérée a et l'autre borne est reliée à une première résistance de puissance P1. Le transformateur comprend également une deuxième bobine B2 dont une borne est référée b et l'autre borne est reliée à une deuxième résistance de puissance P2. Une liaison de signalisation SL bifilaire est connectée aux extrémités des résistances de puissance P1, P2 qui ne sont pas raccordées au transformateur TR. Cette liaison de signalisation SL reçoit par un premier commutateur SW1 respectivement un signal de sonnerie RS ou un signal d'alimentation continue DC (48 volts par exemple) selon respectivement un premier ou une deuxième état d'un signal de commande CS de ce commutateur SW1.

Le transformateur TR comporte d'autre part une bobine de couplage CC dont la première borne est alimentée par une premier amplificateur A1. Selon l'invention la deuxième borne de cette bobine de couplage CC est reliée à un deuxième amplificateur A2 par l'intermédiaire d'un deuxième commutateur SW2 qui est ouvert, respectivement fermé, selon que le signal de commande CS est dans son premier, respectivement second état.

Les deux amplificateurs A1, A2 sont alimentés par un codeur de parole CODEC qui reçoit également le signal prélevé aux bornes a, b du transformateur TR pour en assurer la régulation de niveau.

Ainsi, lorsque le signal de sonnerie RS est injecté, le deuxième commutateur SW2 est ouvert et le transformateur TR qui est alors découplé du codeur CODEC agit comme un filtre passe-bas.

De préférence, on connecte un premier condensateur C1 aux extrémités des résistances de puissance P1, P2 qui ne sont pas connectées à la liaison de signalisation SL.

Le dispositif de l'invention comprend de plus un filtre passe-bas LPF quadripolaire dont un premier dipôle est raccordé aux bornes a, b du transformateur TR par une liaison basse fréquence BF.

Le deuxième dipôle de ce filtre LPF est relié à la ligne d'abonné SUB, de préférence par l'intermédiaire de deux résistances R1, R2 à coefficient de température positif, ceci pour assurer une protection contre les courants forts.

Le filtre passe-bas LPF comprend avantageusement une première CB1 et une deuxième CB2 bobines d'arrêt en mode commun dont les premières bornes sont respectivement connectées aux bornes a, b du transformateur TR. Un deuxième condensateur C2 est connecté aux deuxièmes bornes des deux bobines d'arrêt CB1, CB2 en mode commun. Avantageusement, un troisième C3, respectivement un quatrième C4 condensateurs sont connectés entre la masse et le point commun entre la première bobine d'arrêt en mode commun CB1, respectivement la seconde bobine d'arrêt en mode commun CB2.

On peut également prévoir une première DB1 et une deuxième DB2 bobines d'arrêt en mode différentiel connectées entre le deuxième dipôle et les bornes du deuxième condensateur C2.

Le dispositif de raccordement selon l'invention comprend d'autre part un filtre passe-haut HPF disposé entre la ligne d'abonné SUB et une liaison haute fréquence HF qui sera par exemple raccordée à un modulateur-démodulateur "ADSL".

L'invention ne se limite pas aux exemples de réalisations décrits ci-dessus. En particulier, il est possible de remplacer tout moyen par un moyen équivalent.

## Revendications

1. Dispositif de raccordement d'une ligne d'abonné (SUB) à une liaison haute fréquence (HF) et à une liaison basse fréquence (BF), comprenant un transformateur (TR) disposé entre cette ligne d'abonné (SUB) et une liaison de signalisation (SL), ce transformateur (TR) comportant une bobine de couplage (CC) prévue pour être alimentée par un codeur (CODEC), dispositif comprenant également un premier commutateur (SW1) pour injecter sur ladite liaison de signalisation (SL) respectivement un signal de sonnerie (RS) ou un signal d'alimentation (DC) en réponse respectivement à un premier ou à une deuxième état d'un signal de commande (CS),
**caractérisé en ce qu'**il comprend un deuxième commutateur (SW2) pour respectivement connecter ou déconnecter l'alimentation de ladite bobine de couplage (CC) en réponse respectivement au deuxième ou au premier état dudit signal de commande (CS).

2. Dispositif selon la revendication 1, **caractérisé en ce qu'**il comporte un filtre passe-bas (LPF) disposé entre ledit transformateur (TR) et la ligne d'abonné (SUB).

3. Dispositif selon la revendication 2, **caractérisé en ce que** ledit filtre passe-bas (LPF) comporte un élément capacitif (C2, C3, C4).

4. Dispositif selon la revendication 3, **caractérisé en ce que** ledit filtre passe-bas (LPF) comporte une bobine d'arrêt en mode commun (CB1, CB2) agencée entre ledit élément capacitif (C2, C3, C4) et ledit transformateur (TR).

5. Dispositif selon l'une quelconque des revendications 3 ou 4, **caractérisé en ce que** ledit filtre passe-bas (LPF) comporte une bobine d'arrêt en mode différentiel (DB1, DB2) agencée entre la ligne d'abonné (SUB) et ledit élément capacitif (C2, C3, C4).

6. Dispositif selon la revendication 1, **caractérisé en ce qu'**il comporte un condensateur de filtrage (C1) disposé entre ledit transformateur (TR) et ladite liaison de signalisation (SL).

7. Dispositif selon la revendication 1, **caractérisé en ce que**, comprenant une boucle de régulation dont une extrémité est connectée à ladite bobine de couplage (CC), l'autre extrémité de cette boucle de régulation est connectée à la sortie dudit transformateur (TR), côté ligne d'abonné (a, b).

## Claims

1. A device for connecting a subscriber line (SUB) to a high frequency link (HF) and to a low frequency link (BF), the device comprising a transformer (TR) disposed between said subscriber line (SUB) and a signaling link (SL), the transformer (TR) comprising a coupling coil (CC) designed to be fed by an encoder (CODEC), the device also comprising a first switch (SW1) for injecting either a ringing signal (RS) or a power supply signal (DC) into said signaling link (SL) in response respectively to a first state and a second state of a control signal (CS),
the device being **characterized in that** it comprises a second switch (SW1) for connecting or disconnecting the feed of said coupling coil (CC) in response respectively to the second and to the first states of said control signal (CS).

2. A device according to claim 1**, characterized in that** it includes a lowpass filter (LPF) disposed between said transformer (TR) and the subscriber line (SUB).

3. A device according to claim 2, **characterized in that** said lowpass filter (LPF) comprises a capacitive element (C2, C3, C4).

4. A device according to claim 3, **characterized in that** said lowpass filter (LPF) comprises a common mode stop coil (CB1, CB2) disposed between said capacitive element (C2, C3, C4) and said transformer (TR).

5. A device according to claim 3 or claim 4, **characterized in that** said lowpass filter (LPF) comprises a differential mode stop coil (DB1, DB2) connected between said subscriber line (SUB) and said capacitive element (C2, C3, C4).

6. A device according to claim 1, **characterized in that** it comprises a filter capacitor (C1) connected between said transformer (TR) and said signaling link (SL).

7. A device according to claim 1, **characterized in that** it comprises a regulation loop having one end connected to said coupling coil (CC) and having the other end of said regulation loop connected to the output of said transformer (TR) on the subscriber line side (a, b).

## Patentansprüche

1. Einrichtung zum Anschluss einer Teilnehmerleitung (SUB) an eine Verbindung mit hoher Frequenz (HF) und an eine Verbindung mit niedriger Frequenz (BF), umfassend einen Transformator (TR), der zwischen dieser Teilnehmerleitung (SUB) und einer Signalisierungsverbindung (SL) angeordnet ist, wobei dieser Transformator (TR) eine Koppelspule (CC) umfasst, die dafür vorgesehen ist, von einem Codierer (CODEC) gespeist zu werden, wobei die Einrichtung ebenfalls einen ersten Schalter (SW1) umfasst, um in die Signalisierungsverbindung (SL) jeweils ein Rufsignal (RS) oder ein Speisungssignal (DC) als Antwort auf einen ersten beziehungsweise einen zweiten Zustand eines Steuersignals (CS) einzuspeisen,
**dadurch gekennzeichnet, dass** sie einen zweiten Schalter (SW2) umfasst, um die Speisung der Koppelspule (CC) als Antwort auf den zweiten beziehungsweise auf den ersten Zustand eines Steuersignals (CS) jeweils zu verbinden oder zu trennen.

2. Einrichtung nach Anspruch 1, **dadurch gekennzeichnet, dass** sie ein zwischen dem Transformator (TR) und der Teilnehmerleitung (SUB) angeordnetes Tiefpassfilter (LPF) umfasst.

3. Einrichtung nach Anspruch 2, **dadurch gekennzeichnet, dass** das Tiefpassfilter (LPF) ein kapazitives Bauteil (C2, C3, C4) umfasst.

4. Einrichtung nach Anspruch 3, **dadurch gekennzeichnet, dass** das Tiefpassfilter (LPF) eine Gleichtakt-Drossel (CB1, CB2) umfasst, die zwischen dem kapazitiven Bauteil (C2, C3, C4) und dem Transformator (TR) angeordnet ist.

5. Einrichtung nach einem beliebigen der Ansprüche 3 oder 4, **dadurch gekennzeichnet, dass** das Tiefpassfilter (LPF) eine Differentialdrossel (DB1, DB2) umfasst, die zwischen der Teilnehmerleitung (SUB) und dem kapazitiven Bauteil (C2, C3, C4) angeordnet ist.

6. Einrichtung nach Anspruch 1, **dadurch gekennzeichnet, dass** sie einen Filterkondensator (C1) umfasst, der zwischen dem Transformator (TR) und der Signalisierungsverbindung (SL) angeordnet ist.

7. Einrichtung nach Anspruch 1, **dadurch gekennzeichnet, dass**, wenn die Einrichtung eine Regelschleife umfasst, deren eines Ende mit der Koppelspule (CC) verbunden ist, das andere Ende dieser Regelschleife ist mit dem Ausgang des Transformators (TR) auf der Seite der Teilnehmerleitung (a, b) verbunden.
